# EUROPEAN PATENT SPECIFICATION

(11) **EP 4 469 340 B1**
(45) Date of publication and mention of the grant of the patent: **22.10.2025**
(21) Application number: 23703643.9
(22) Date of filing: 13.01.2023
(51) Int. Cl.: B62K 19/46, B62J 9/23, B62J 6/00, B62J 11/24, B62J 9/14

(54) **SADDLE VEHICLE WITH EXTRACTABLE AND ILLUMINABLE EASY-TO-EXTRACT UNDERSADDLE COMPARTMENT**
SATTELFAHRZEUG MIT LEICHT AUSZNEHMBAREM UND BELEUCHTBAREM UNTERSATTELFACH
VÉHICULE À SELLE AVEC COMPARTIMENT SOUS LA SELLE FACILEMENT AMOVIBLE ET ÉCLAIRÉ

(30) Priority: 26.01.2022 IT 202200001283
(43) Date of publication of application: 04.12.2024
(73) Proprietor: Piaggio & C. SpA, 56025 Pontedera (Pisa) (IT)
(72) Inventor: BARACCHINO, Luigi, 56025 Pontedera (IT)
(74) Representative: Pipoli, Massimo
(86) International application number: PCT/IB2023/050323
(87) International publication number: WO 2023/144646

(56) References cited:
- EP-A2- 0 807 568
- WO-A1-2019/021541
- JP-A- H0 958 549

## Description

### TECHNICAL FIELD OF THE INVENTION

The present description relates to the technical field of rideable saddle vehicles comprising an undersaddle compartment for a helmet.

### BACKGROUND OF THE INVENTION

It is widely known in rideable saddle vehicles such as, by way of non-limiting example, scooters, to provide a housing located below the saddle which is adapted to define an undersaddle compartment in which the driver of the vehicle can place the helmet and/or other items when the vehicle is not being used. The housing which defines the undersaddle compartment is usually made of plastic material and is inserted into an appropriate seat obtained under the saddle in the vehicle bodywork. In particular, fixed-type housings are known, which are intended to be fastened essentially permanently to the chassis of the vehicle itself, typically by means of fastening screws. In order to light the interior of the undersaddle compartment, in fixed-type housings it is known to provide a through opening in the housing itself, which is adapted to be crossed by the light emitted by a lighting device located outside the housing itself. Documents WO2019021541 and JPH08253183A describe examples of this type of solutions. In addition to the fixed-type housings described above, extractable housings are also known, i.e., housings adapted to define an undersaddle compartment, which are inserted into the specific seat obtained in the bodywork of the vehicle without being fastened with screws or any other fastening elements, so as to be inserted into and removed from the respective seat without needing to use any tools. In order to light the extractable housings of the type described above, it is known to provide a lighting device located inside the undersaddle compartment, which is connected by means of electric cables to a power supply source located outside the housing, such as the battery of the vehicle, for example. A drawback of such solutions including the use of extractable-type housings is due to the fact that to remove the housing from the respective seat, it is first necessary to disassembly the lighting device, which makes the extraction of the housing relatively complicated and makes the extraction times relatively long. A further drawback of the solutions with an extractable housing of the type described above is linked to the fact that during the extraction of the housing, the power supply cables of the lighting device can be accidentally damaged.

It is a general object of the present description to provide a rideable saddle vehicle comprising an extractable housing adapted to define a helmet compartment which is able to obviate or reduce at least partially the drawbacks discussed above with reference to the prior art. JP H09 58549 A discloses a rideable saddle vehicle comprising an extractable housing which defines an undersaddle compartment suitable for a helmet.

These and other objects are achieved by a rideable saddle vehicle as defined in the appended claim 1 in the most general form thereof and in the dependent claims in some particular embodiments.

### BRIEF DESCRIPTION OF THE DRAWINGS

The invention will be better understood from the following detailed description of embodiments thereof, given by way of non-limiting example with reference to the accompanying drawings, in which:
Figure 1 shows a perspective view in which a rideable saddle vehicle is depicted with some parts removed, and in particular an extractable housing adapted to define an undersaddle compartment for a helmet is shown;
Figure 2 shows a perspective view of the vehicle in Figure 1 in which the extractable housing is extracted from a respective containment seat;
Figure 3 shows a side plan view of the extractable housing in Figure 1;
Figure 4 shows an enlarged portion of Figure 3.

### DETAILED DESCRIPTION

In the accompanying drawings, equal or similar elements are indicated by the same reference numerals.

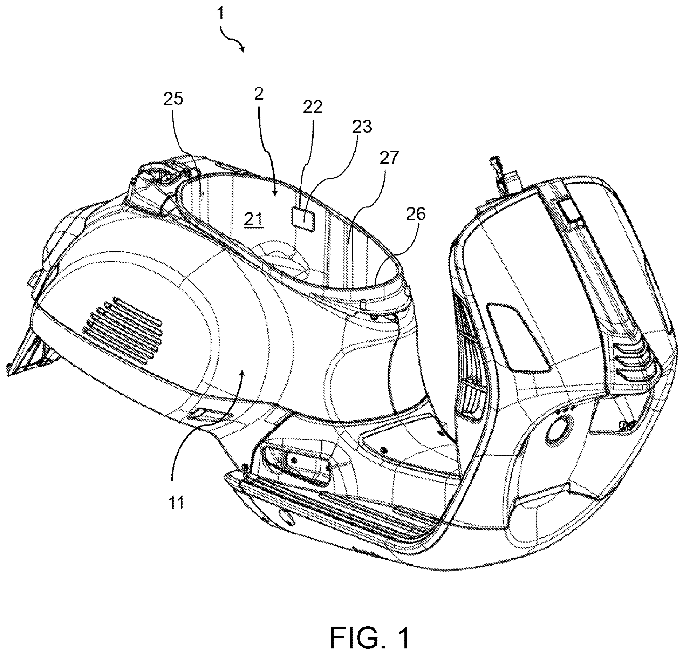

With reference to Figures 1-2, a rideable saddle vehicle according to a currently preferred embodiment has been indicated as a whole by reference numeral 1. In Figures 1-2, some parts of vehicle 1 known per se and not relevant for the purposes of the present description have been removed. In accordance with an embodiment, the rideable saddle vehicle 1 is a motorcycle 1. In the particular example shown in Figures 1-2, the rideable saddle vehicle 1 is a motorcycle 1 and more in particular it is embodied, without introducing any limitations, by a scooter 1. In the example shown, the vehicle 1 comprises only two wheels, in particular a rear wheel and a front wheel (not depicted but known per se). However, it is worth noting that for the purposes of the present description, the term "motorcycle" should be interpreted broadly, also including in said definition motorcycles having three wheels, for example two wheels of which are paired and steered wheels on the fore-carriage and one is a driving wheel on the rear-carriage. In a manner known per se, the rideable saddle vehicle 1 comprises a saddle where the user of the vehicle 1 can sit astride and a steering handlebar operatively connected to the front wheel (the saddle and the handlebar of the vehicle are not depicted in the accompanying drawings but are of a type known per se). In a manner known per se, the vehicle 1 further comprises a bodywork 11. In this regard, it is noted that for the purposes of the present description, the term "bodywork" also comprises a load-bearing body in the case of a vehicle 1 with a load-bearing body.

Again with reference to Figures 1-2, the vehicle 1 comprises an extractable housing 2 which defines an undersaddle compartment 21 for a helmet. The extractable housing 2 is preferably made of plastic material and is inserted into a specific containment seat 12 defined in the bodywork 11 and/or chassis of the vehicle 1. The term "extractable housing" means, in a manner known per se, that the housing 2 is configured to be inserted into the containment seat 12 without being fastened with screws or other similar fastening elements to the bodywork 11 or chassis of the vehicle 1 so as to be inserted into and removed from the seat 12 without needing to use any tools. In accordance with an embodiment, the extractable housing 2 comprises a bottom wall 24 and a peripheral wall 25-28 which define the aforesaid undersaddle compartment 21. The peripheral wall 25-28 is connected and extends transversely with respect to the bottom wall 24. In particular, the peripheral wall 25-28 comprises a rear portion 25 arranged towards the rear-carriage of the vehicle 1, a front portion 26 arranged towards the fore-carriage of the vehicle 1, and a pair of opposite side portions 27,28. Each side wall 27,28 is interposed between the rear and front portions 25,26 and is connected to such rear and front portions 25,26. In accordance with an embodiment, in a manner known per se, the saddle of the vehicle 1 is hinged to the chassis or bodywork of the vehicle 1 so as to take a use configuration, in which the saddle is arranged so as to close the undersaddle compartment 21 at the top, and an opening configuration, in which the saddle is arranged so as to allow access to the undersaddle compartment 21.

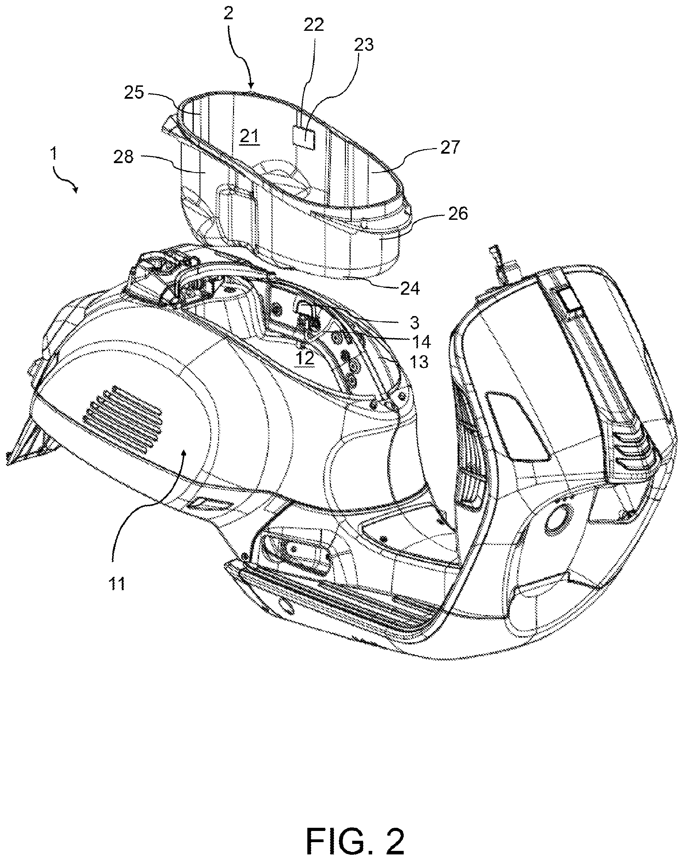

With reference to Figure 2, the vehicle 1 comprises at least one lighting device 3 which is adapted to emit at least one light beam. Preferably, the lighting device 3 is arranged so that the aforesaid light beam is horizontal or substantially horizontal. The lighting device 3 can comprise, for example, an LED lighting device. In accordance with an embodiment, the lighting device 3 is operatively connected, directly or indirectly, to a power supply source, such as a battery for starting the vehicle 1, for example. The lighting device 3 is arranged outside the extractable housing 2 and is preferably fastened to a wall 13 of the containment seat 12. Preferably, the lighting device 3 comprises at least one power supply cable 14 extending along the wall 13 of the containment seat 12.

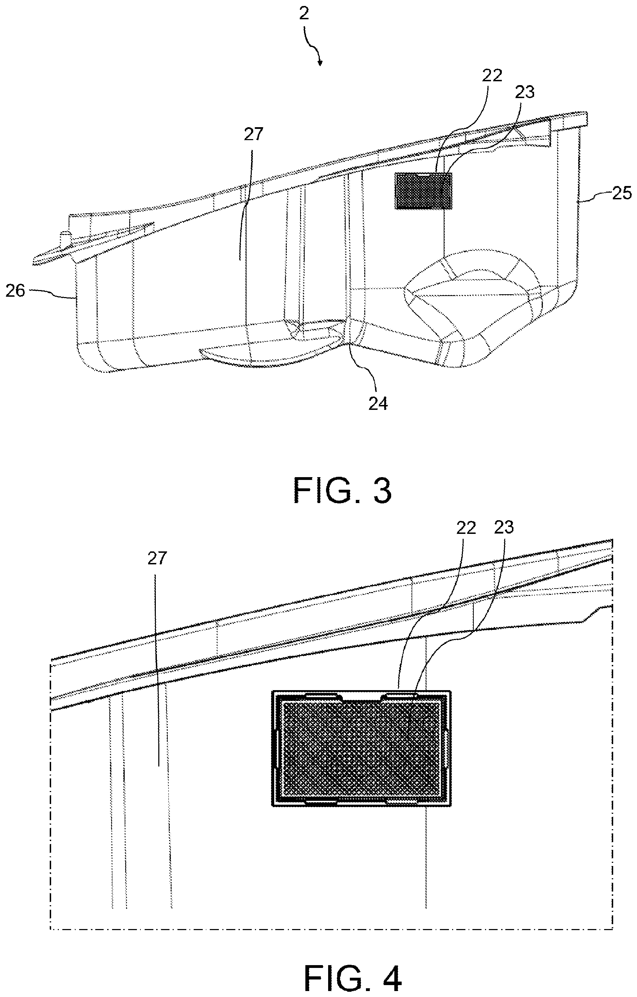

With reference to Figures 1-4, the extractable housing 2 comprises at least one window 22 and the lighting device 3 is arranged so that the at least one light beam can cross the window 22 to light the undersaddle compartment 21 when the housing 2 is received in the containment seat 12. In particular, in accordance with an embodiment, the lighting device 3 is arranged in the containment seat 12. Preferably, the lighting device 3 is arranged adjacent to and in front of the window 22 when the housing 2 is received in the containment seat 12.

The lighting device 3 can further comprise a reflecting tunnel (not shown) to direct the light beam towards said window 22.

With reference to Figures 1-4, in accordance with an embodiment, the window 22 comprises an element 23 which is transparent or partially transparent to the light beam emitted by the lighting device 3. In accordance with an embodiment, the element 23 is an element made of plastic or glass. The element 23 is fastened to the extractable housing 2. In particular, in accordance with an embodiment, the element 23 can be snappingly fastened to a part of the extractable housing 2 or can be co-molded with the extractable housing 2. In accordance with an advantageous embodiment, the transparent or partially transparent element 23 is adapted to refract the light beam emitted by the lighting device 3 and is further adapted to hide at least partially from view or conceal the lighting device 3. Thereby, an advantage from the aesthetic point of view, since the lighting device is hidden from view, and an advantage from a functional point of view, since such an element 23 causes the light emitted by the device 3 to be less directive, are achieved. In particular, the refracting function obtained by the transparent element 23 allows deviating the light beam generated by the light source towards the bottom of the housing 2, so as to obtain an optimal lighting thereof. The refracting effect thus results in an emitted light not directed upwards, which could annoy the user, but rather a light towards the bottom of the housing. This aspect leads to a considerable advantage in terms of lighting uniformity inside the extractable housing 2.

For example, and without introducing any limitation, in the example shown in the accompanying figures the element 23 comprises or consists of a glass or a plastic element comprising a plurality of refracting facets, to enlarge the light beam. Thereby, the light beam inside the extractable housing 2 is uniform and diffused across the whole surface of the housing, so that there are no poorly lit zones or portions thereof. In accordance with an alternative embodiment, however, the window 22 can also consist of a through opening. In accordance with a preferred embodiment, the window 22 is provided on one of the side portions 27,28 of the peripheral wall 25-28. In general, however, a plurality of lighting devices 3 and a plurality of windows 22 could be provided, for example a window 22 associated with each of the side portions 27,28 where each window 22 is associated with a respective lighting device 3.

In accordance with an embodiment, the lighting device 3 is operatively connected to an opening sensor of the saddle or an opening button of the saddle or an ignition block of the vehicle 1.

Based on the explanation above, it is thus possible to understand how a ridable saddle vehicle according to the present description allows achieving the objects mentioned above with reference to the prior art.

In fact, by providing a light window in the extractable housing which defines the undersaddle compartment and arranging a lighting device outside the extractable housing, it is possible to remove the extractable housing from the respective seat in a particularly quick and easy manner, without needing to disassemble the lighting device and without the risk of damaging the power supply cables of the lighting device.

Without prejudice to the principle of the invention, the embodiments and the constructional details may be broadly varied with respect to the above description merely given by way of a non-limiting example, without departing from the scope of the invention as defined in the appended claims.

## Claims

1. A rideable saddle vehicle (1) comprising:
- an extractable housing (2) which defines an undersaddle compartment (21) for a helmet;
- **characterized by**
at least one lighting device (3) arranged outside said extractable housing (2) and adapted to emit at least one light beam;
said extractable housing (2) comprising at least one window (22) and said at least one lighting device (3) being arranged so that the at least one light beam can cross said window (22) to light said undersaddle compartment (21),
wherein said window (22) comprises an element (23) being transparent or partially transparent to said light beam, which is fixed to said extractable housing (2), and wherein said transparent or partially transparent element (23) is adapted to refract said at least one light beam and hide at least partially from view said at least one lighting device (3).

2. A rideable saddle vehicle (1) according to claim 1, wherein said transparent or partially transparent element (23) comprises or consists of a glass or a plastic element comprising a plurality of refracting facets to enlarge the light beam.

3. A rideable saddle vehicle (1) according to claim 1, wherein said at least one lighting device (3) is arranged adjacent to and in front of said window (22).

4. A rideable saddle vehicle (1) according to claim 2 or 3, wherein said at least one lighting device (3) comprises a reflecting tunnel for directing the light beam towards said window (22).

5. A rideable saddle vehicle (1) according to claims 1-4, wherein said transparent or partially transparent element (23) is snappingly fastened to a part of said extractable housing (2) or is co-molded with said extractable housing (2).

6. A rideable saddle vehicle (1) according to any one of the preceding claims, wherein said extractable housing (2) comprises a bottom wall (24) and a peripheral wall (25-28) which define said undersaddle compartment (21), the peripheral wall (25-28) being connected and extending transversely with respect to the bottom wall (24), wherein the peripheral wall (25-28) comprises a rear portion (25) arranged towards the rear-carriage of said vehicle (1), a front portion (26) arranged towards the fore-carriage of said vehicle (1), and a pair of opposite side portions (27, 28), each of which is interposed between and connected to said rear and front portions (25, 26), wherein said window (22) is provided on one of said side portions (25, 26) of the peripheral wall (25-28).

7. A rideable saddle vehicle (1) according to any one of the preceding claims, wherein said at least one lighting device (3) is operatively connected to an opening sensor of the saddle or an opening button of the saddle or an ignition block of said vehicle (1).

8. A rideable saddle vehicle (1) according to any one of the preceding claims, wherein said vehicle is a motorcycle (1), preferably a scooter (1).

## Patentansprüche

1. Fahrbares Sattelfahrzeug (1), umfassend:
- ein ausnehmbares Gehäuse (2), das ein Untersattelfach (21) für einen Helm definiert;
- **gekennzeichnet durch**
mindestens eine Beleuchtungsvorrichtung (3), die außerhalb des ausnehmbaren Gehäuses (2) angeordnet ist und dazu eingerichtet ist, mindestens einen Lichtstrahl auszustrahlen;
wobei das ausnehmbare Gehäuse (2) umfassend mindestens ein Fenster (22) und die mindestens eine Beleuchtungsvorrichtung (3) angeordnet ist, sodass der mindestens eine Lichtstrahl das Fenster (22) durchqueren kann, um das Untersattelfach (21) zu beleuchten,
wobei das Fenster (22) ein Element (23) umfasst, das für den Lichtstrahl transparent oder teilweise transparent ist, das an dem ausnehmbaren Gehäuse (2) befestigt wird, und wobei das transparente oder teilweise transparente Element (23) eingerichtet ist, den mindestens einen Lichtstrahl zu brechen und die mindestens eine Beleuchtungsvorrichtung (3) mindestens teilweise aus dem Blickfeld zu verbergen.

2. Fahrbares Sattelfahrzeug (1) nach Anspruch 1, wobei das transparente oder teilweise transparente Element (23) ein Glaselement oder ein Kunststoffelement umfasst oder daraus besteht, das eine Vielzahl von brechenden Seiten umfasst, um den Lichtstrahl zu verbreitern.

3. Fahrbares Sattelfahrzeug (1) nach Anspruch 1, wobei die mindestens eine Beleuchtungsvorrichtung (3) angrenzend an und vor dem Fenster (22) angeordnet ist.

4. Fahrbares Sattelfahrzeug (1) nach Anspruch 2 oder 3, wobei die mindestens eine Beleuchtungsvorrichtung (3) einen reflektierenden Tunnel umfasst, um den Lichtstrahl zu dem Fensters (22) zu leiten.

5. Fahrbares Sattelfahrzeug (1) nach einem der Ansprüche 1 bis 4, wobei das transparente oder teilweise transparente Element (23) schnappend an einem Teil des ausnehmbaren Gehäuses (2) befestigt wird oder mit dem ausnehmbaren Gehäuse (2) mitgeformt ist.

6. Fahrbares Sattelfahrzeug (1) nach einem der vorhergehenden Ansprüche, wobei das ausnehmbare Gehäuse (2) eine Bodenwand (24) und eine Umfangswand (25-28) umfasst, die das Untersattelfach (21) definieren, wobei die Umfangswand (25-28) mit der Bodenwand (24) verbunden ist und sich quer in Bezug auf die Bodenwand (24) erstreckt, wobei die Umfangswand (25-28) einen hinteren Abschnitt (25) umfasst, der zu dem Hinterwagen des Fahrzeugs (1) angeordnet ist, einen vorderen Abschnitt (26), der zu dem Vorderwagen des Fahrzeugs (1) angeordnet ist, und ein Paar gegenüberliegender Seitenabschnitte (27, 28), von denen jeder zwischen den genannten hinteren und vorderen Abschnitten (25, 26) angeordnet ist und mit diesen verbunden ist, wobei das Fenster (22) an einem der Seitenabschnitte (25, 26) der Umfangswand (25-28) vorgesehen ist.

7. Fahrbares Sattelfahrzeug (1) nach einem der vorhergehenden Ansprüche, wobei die mindestens eine Beleuchtungsvorrichtung (3) operativ mit einem Öffnungssensor des Sattels oder einem Öffnungsknopf des Sattels oder einem Zündblock des Fahrzeugs (1) verbunden ist.

8. Fahrbares Sattelfahrzeug (1) nach einem der vorhergehenden Ansprüche, wobei das Fahrzeug ein Motorrad (1), vorzugsweise ein Motorroller (1) ist.

## Revendications

1. Véhicule à selle (1) comprenant :
- un compartiment (2) amovible qui définit un compartiment sous la selle (21) pour un casque ;
- **caractérisé en ce qu'**il comprend au moins un dispositif d'éclairage (3) disposé à l'extérieur dudit compartiment amovible (2) et adapté à émettre au moins un faisceau lumineux ;
ledit compartiment amovible (2) comprenant au moins une fenêtre (22) et ledit au moins un dispositif d'éclairage (3) étant disposé de manière que ledit au moins un faisceau lumineux puisse traverser ladite fenêtre (22) pour éclairer ledit compartiment sous la selle (21),
ladite fenêtre (22) comprenant un élément (23) transparent ou partiellement transparent au dit faisceau lumineux, qui est fixé audit compartiment amovible (2), et ledit élément transparent ou partiellement transparent (23) étant adapté à réfracter ledit au moins un faisceau lumineux et à dissimuler au moins partiellement à la vue ledit au moins un dispositif d'éclairage (3).

2. Véhicule à selle (1) selon la revendication 1, dans lequel ledit élément transparent ou partiellement transparent (23) comprend ou est constitué d'un élément en verre ou en plastique comprenant une pluralité de facettes réfractantes pour élargir le faisceau lumineux.

3. Véhicule à selle (1) selon la revendication 1, dans lequel ledit au moins un dispositif d'éclairage (3) est disposé adjacent et en face de ladite fenêtre (22).

4. Véhicule à selle (1) selon la revendication 2 ou 3, dans lequel ledit au moins un dispositif d'éclairage (3) comprend un tunnel réfléchissant pour diriger le faisceau lumineux vers ladite fenêtre (22).

5. Véhicule à selle (1) selon les revendications 1 à 4, dans lequel ledit élément transparent ou partiellement transparent (23) est fixé par encliquetage à une partie dudit compartiment extractible (2) ou est co-moulé avec ledit compartiment amovible (2).

6. Véhicule à selle (1) selon l'une quelconque des revendications précédentes, dans lequel ledit compartiment amovible (2) comprend une paroi inférieure (24) et une paroi périphérique (25-28) qui définit ledit compartiment sous la selle (21), la paroi périphérique (25-28) étant connectée et s'étendant transversalement par rapport à la paroi inférieure (24), dans lequel la paroi périphérique (25-28) comprend une portion arrière (25) disposée vers l'arrière du véhicule (1), une portion avant (26) disposée vers l'avant du véhicule (1), et une paire de portions latérales opposées (27, 28), chacune étant interposée entre et connectée auxdites portions arrière et avant (25, 26), dans lequel ladite fenêtre (22) est prévue sur l'une desdites
portions latérales (25, 26) de la paroi périphérique (25-28).

7. Véhicule à selle (1) selon l'une quelconque des revendications précédentes, dans lequel ledit au moins un dispositif d'éclairage (3) est connecté de manière fonctionnelle à un capteur d'ouverture de la selle ou à un bouton d'ouverture de la selle ou à un bloc d'allumage dudit véhicule (1).

8. Véhicule à selle (1) selon l'une quelconque des revendications précédentes, dans lequel ledit véhicule est une motocyclette (1), de préférence un scooter (1).
